# EUROPEAN PATENT APPLICATION

(11) **EP 1 683 978 A1**
(43) Date of publication of application: **26.07.2006**
(21) Application number: 05001300.2
(22) Date of filing: 22.01.2005
(51) Int. Cl.: F16C 33/60, F16C 33/58

(54) **Roller bearing**

(71) Applicant: AB SKF, S-415 50 Göteborg (SE)
(72) Inventor: Holsnijders, Jos, 4142 EN Leerdam (NL)
(74) Representative: Gosdin, Michael

(57) **Abstract**

The invention relates to a roller bearing (1) having an inner ring (2) and an outer ring (3), wherein a plurality of rolling elements (4) is arranged between the inner ring (2) and the outer ring (3). To reduce the costs for the bearing and to ensure sufficient stiffness of the bearing the proposed roller bearing is characterized in that the inner ring (2) is connected with or has a section (5) which has a raceway (6) for the rolling elements (4) wherein the surface of this raceway (6) is oriented at least partially to the center or axis (7) of the bearing (1) and that the outer ring (3) is connected with or has a section (8) which has a raceway (9) for the rolling elements (4) wherein the surface of this raceway (9) is oriented at least partially away from the center or axis (7) of the bearing (1).

## Description

The invention relates to a roller bearing having an inner ring and an outer ring, wherein a plurality of rolling elements is arranged between the inner ring and the outer ring.

Roller Bearings according to this design are well known in the state of the art. To bear high bearing forces with high stiffness the bearing rings are normally made of solid steel rings in which the raceways for the roller elements are machined. This concept leads to quite high costs of the bearing as well as to a relatively high weight of the bearing.

In many cases the demands to the bearing to bear forces are limited due to the application. Consequently, it is not necessary to machine the bearing rings from solid metal rings.

A bearing for limited requirements is known from EP 0 328 496 A2. This document shows a two row angular contact ball bearing which has bearing rings made from sheet metal. The sheet metal is deformed in such a way that raceways for the balls are created. A bearing according to this concept is significantly cheaper than a bearing with solid bearing rings but sufficient for many applications where the requirements to bear forces are low.

The pre-known ball bearings according to the mentioned solution do not fulfil all demands. It is desired to further reduce the material costs and the production time and assembly time for the manufacturing of the bearing. Furthermore, there is the wish to further reduce the weight of the bearing. On the other hand a sufficient stiffness is necessary to use the bearing for different applications.

Therefore, it is the o b j e c t of the invention to create an improved bearing which satisfy the above mentioned requirements. It should be possible to produce the bearing with a minimum use of material and to produce it in an easy way in short time. Furthermore, the bearing should have good stiffness properties in relation to the weight. Finally, it should be possible to produce the bearing with high volume production methods with a high precision so that challenging demands for a precise bearing can be satisfied.

The s o l u t i o n of this object according the invention is characterized in that the inner ring of the bearing is connected with or has a section which has a raceway for the rolling elements wherein the surface of this raceway is oriented at least partially to or towards the center or axis of the bearing and that the outer ring of the bearing is connected with or has a section which has a raceway for the rolling elements wherein the surface of this raceway is oriented at least partially away from the center or axis of the bearing.

Accordingly, the proposed roller bearing - able to bear radial and/or axial forces - comes up with an inner ring which is formed in such a way that the radially outer raceway for the rolling elements is connected with this ring. On the other side, the outer ring of the bearing is designed in such a way that it also formes or contains the radially inner raceway.

Preferably, the inner ring and the section connected to or being part of it have a substantially U-shaped form in the cross section; also the outer ring and the section connected to or being part of it can have such a substantially U-shaped form in the cross section. In the mounted state of the bearing both substantially U-shaped parts can be inserted with their open end in each other.

At least one of the sections, preferably both sections, forming a leg of the substantially U-shaped part can have two axially extending portions which are connected by a raceway portion forming the raceway for the rolling elements. In this case both axially extending portions can be arranged with different radial distances from the axis of the bearing. Preferably, the bigger radial distance is between 105 % and 135 %, preferably between 110 % and 130 %, of the smaller radial distance. Furthermore, the axial length of the axially extending portion adjacent to the bottom of the U-shaped part can be substantial longer than the axially extending portion remote from the bottom of the U-shaped part.

The thickness of the axially extending portions are advantageously substantially equal and bigger than the thickness of the raceway portion. The thickness of the raceway portion can be between 65 % and 90 % of the thickness of the axially extending portions.

The middle of the raceway connected with or being part of the outer ring can be arranged at a smaller distance from the axis of the bearing as the middle of the raceway connected with or being part of the inner ring. The middle of the raceways means the middle point of the contact line between the raceways and the rolling elements seen in a radial cross section.

In the mounted state of the bearing the inner ring and the outer ring can extend substantially over the same axial region. With such a design the bearing has a substantial rectangular shape in cross section an can easily substitute a classical bearing with solid bearing rings. Generally, all geometric parameters with respect to the outer surface of the bearing are chosen according to standard sizes of bearings so that an easy substitution of catalogue bearings by the bearing according to the invention is possible.

At least one of the rings, preferably both rings, can have a radial extending portion at one of their axial ends extending into the direction to the other ring. This radial extending portion can have a reduced thickness compared with the thickness of the inner ring and/or outer ring. The thickness of the radial extending portion is preferably between 50 % and 85 % of the thickness of the inner ring and/or outer ring. With this design an exact outer geometry of the bearing after having carried out the last manufacturing step by sheet metal deforming is ensured.

Preferably, additional function elements are connected to or are fixed at the bearing, especially to the outer ring of the bearing. The function element can be e. g. a rotational speed and/or angle detection device, a temperature detection device, a load detection device, a radial displacement device for static load measurement, a measurement device for measuring a parameter or a condition of the lubricant of the bearing, especially the water ingress in the lubricant, a measurement device for measuring the water ingress or humidity ingress in the bearing and/or - more generally spoken - a measurement device for measuring a physical property or a physical parameter of the bearing.

For ther more, it can be a sealing device. In this case the sealing device can seal the ring slit between the end of the radial extending portion and the other ring.

In general, the radial extending portion can be deformed from an axially extending state to the radial extending state during assembly of the bearing. To facilitate manufacturing cost and time the function element, especially the sealing device, can be assembled and fixed in the bearing by deforming the extending portion from the axially extending state to the radial extending state. I. e. the function element is inserted into the pre-assembled bearing before the radially extending portion is brought into its final position.

The inner ring and/or the outer ring, preferably both rings, and the sections consist preferably of sheet metal. The sheet metal can have substantially the same thickness along its entire extention, at least before being formed to its final shape.

Normally, the bearing has a cage for guiding the rolling elements. In an alternative embodiment the cage can be left out and a full complement bearing can be created by inserting as many rolling elements as possible.

The inner ring and/or the section connected to or being part of it and/or the outer ring and/or the section connected to or being part of it can be hardened by suitable heat treatment.

At least a part of the inner ring and/or the section connected to or being part of it and/or the outer ring and/or the section connected to or being part of it, especially the raceways, can be coated with a cover with low friction properties. The cover can consists of polytetraflourethylen (PTFE) or of a diamond like coating (DLC).

The bearing rings can consist of steel, aluminium, magnesium, titan or an alloy of those metalls.

The rolling elements are preferably balls. They can consist of steel, of ceramic material, of thermoplastic material or of glass.

Preferably, the outer dimensions of the bearing are in accordance with the outer dimensions of standard bearings, especially of catalogue bearings. With this feature the bearing according to the invention can be easily substituted by a common catalogue bearing with standard dimensions.

The invention further relates to a roller bearing arrangement, which is characterized in that at least two bearings as described above are arranged as angular contact ball bearings. The at least two bearings can be arranged side by side. The bearings can be self alligning ball bearings.

Also it is possible that the roller bearing arrangement with at least two bearings as described above is a thrust bearing.

With the invention proposal a cheap bearing is created which has a quite high stiffness in relation to its weight. Furthermore, the manufacturing costs and the manufacturing time as well as the necessary material are reduced or minimized.

Due to the proposed design of the rolling bearing it is quite easy to influence the stiffness / flexibility of the bearing and to adapt it to the specific application. Furthermore, it is possible to produce the bearing in such a way that the total rolling bearing system has a predefined rigidity.

Compared with conventional bearings with solid rings more than 80 % of the manufacturing costs, more than 40 % of the manufacturing time and more than 30 % of the material costs can be saved. Furthermore, the suggested bearing is significantly lighter due to the hollow sections in the inner of the bearing.

Preferred applications of the proposed bearing are for example bearings for bicycles and other applications where no high demands with respect to bearing forces exist.

The bearing is for example advantageously employed in the food industry and for conveyor belts. Is can also be used for all applications where the loads are quite low, flexibility is needed and/or thermal compensation is required.

The drawing shows an embodiment of the roller bearing according to the invention.
- Fig. 1: shows a radial cross section of a roller bearing,
- Fig. 2a: till
- Fig. 2d: show schematically four steps of the assembly of the roller bearing and
- Fig. 3: shows a bearing arrangement with two roller bearings.

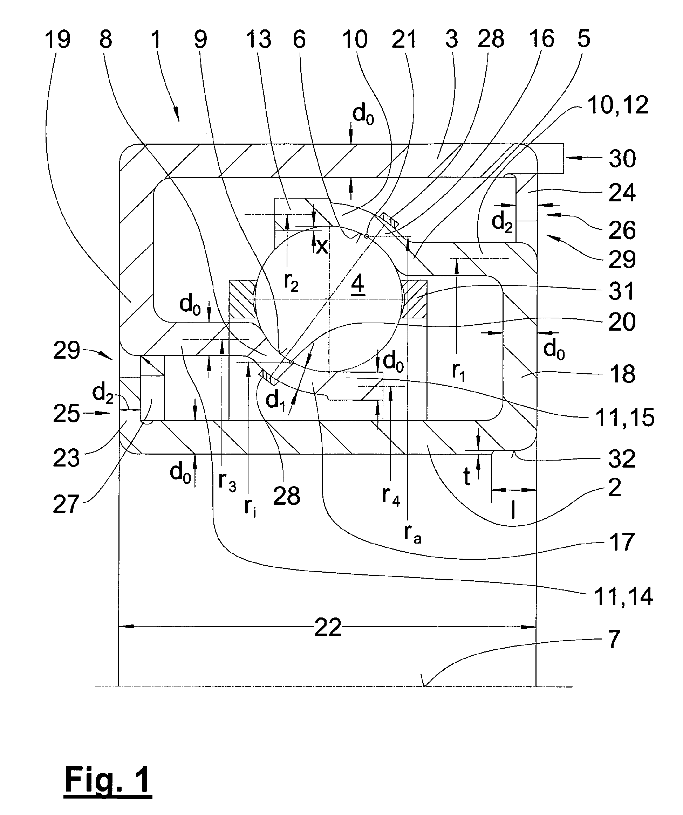

Fig. 1 shows a cross section of a roller bearing 1. The bearing 1 has an inner ring 2 to be mounted on a shaft (not depicted) and an outer ring 3 mounted in a housing (not depicted). The outer geometry of the inner ring 2 and the outer ring 3 correspond to standard bearing sizes so that the bearing 1 can be employed as a substitute for classical bearings with solid bearing rings. Fig. 1 shows a single row angular contact ball bearing. Also a single row deep groove ball bearing or other types of bearings can be created with the concept of the invention. Both rings 2, 3 extend along the same axial region 22 as can be seen in fig. 1.

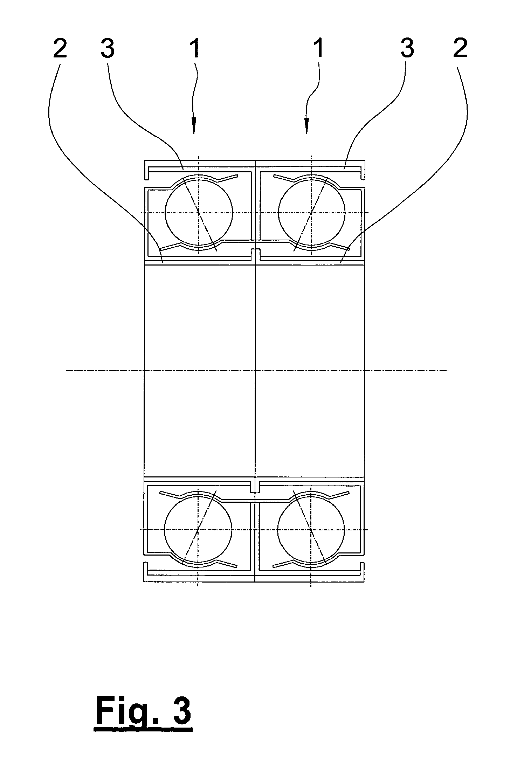

As can be seen in fig. 3 in the case of angular contact ball bearings two bearings 1 are combined to create the two row bearing arrangement depicted here (as an example X-configuration of the bearings is shown in fig. 3).

Referring to fig. 1 rolling elements 4 (balls) are arranged between the inner ring 2 and the outer ring 3. For this the inner ring 2 has a section 5 wherein ring 2 and section 5 are made from one piece of sheet metal by a forming process (deep-draw and/or pressing process). The section 5 is deformed in that way that it forms a raceway 6 for the balls 4.

Accordingly, the outer ring 3 is made of a sheet metal part which forms a section 8 with a second raceway 9 for the balls 4.

Both rings 2, 3 with their respective sections 5, 8 have a U-shaped form in cross section. The U-shape has the inner/outer ring 2, 3 as one leg and another leg 10, 11 wherein the legs 2, 10; 3, 11 are connected by a bottom 18, 19.

The middle 20, 21 of the raceways 9, 6, i. e. the middle point of the contact line between the balls 4 and the raceway 9, 6, have a certain radius from the center or axis 7 of the bearing 1. The radius rᵢ of the middle 20 of the raceway 9 is smaller than the radius rₐ of the middle 21 of the raceway 6.

Both legs 10, 11 have 3 section parts each. A first axial extending portion 12, 14 is adjoining the bottom 18, 19 of the U-shaped ring part. Then, a raceway portion 16, 17 follows. Finally, a second axial extending portion 13, 15 follows which is arranged remote from the bottom 18, 19. While the sheet metal used for producing the rings 2, 3 has an original thickness do the thickness is reduced to d₁ along the raceway portions 16, 17 by a pressing and/or deep-draw process during manufacturing of the rings 2, 3. By this the geometry of the raceways 6, 9 can be manufactured precisely.

As can be further seen the two axial extending portions 12, 13; 14, 15 of the legs 10, 11 are arranged on different diameters. The radius r₁ of portion 12 is smaller than the radius r₂ of portion 13. Also, the radius r₄ of portion 15 is smaller than the radius r₃ of portion 14.

The transition from the raceway 6, 9 to the second axially extending portion 13, 15 comes up with a certain protuberance x (between the radial end of the axially extending portion and the deepest point of the raceway) which can be between 3 % up to 25 % of the thickness do of the sheet metal. By this design the bearing 1 can be snap-fitted in the assembled state.

To create a good lubricated and sealed bearing arrangement sealing devices 27 are employed to seal the bearing 1. The sealing device 27 (shown in fig. 1 only in the left lower corner) is placed within the inner ring 2 and outer ring 3 and fixed by radial extenting portions 23 and 24. Those portions 23, 24 at both rings 2, 3 have a reduced diameter d₂ compared with the original thickness do of the sheet metal. At the axial end 25, 26 of the radial extending portions 23, 24 a ring slit 29 exists which is sealed by the sealing device 27. The sealing device 27 is fixed by deforming the radial extending portions 23, 24 from an axial extending state 30 (shown with broken lines in the right upper corner in fig. 1) in which the sealing device 27 can be pushed into place into the radial extending state (shown with full lines) during assembly.

The bearing 1 can be equipped with further function elements. As an example a temperature detecting device 28 is located in the region of one of the raceways.

A (standard) cage 31 can be employed but also a full complement bearing is possible.

To improve the precission of the geometry of the inner ring after carrying out the deforming process of the sheet metal a cylindrical impression 32 is machined during the deforming process (deep-draw or pressing process). The cylindrical impression has a length 1 between 4 % and 18 % of the axial extention 22 of the inner ring 2. The depth t is between 5 % and 20 % of the thickness do of the sheet metal. Also the outer ring 3 can have such a cylindrical impression.

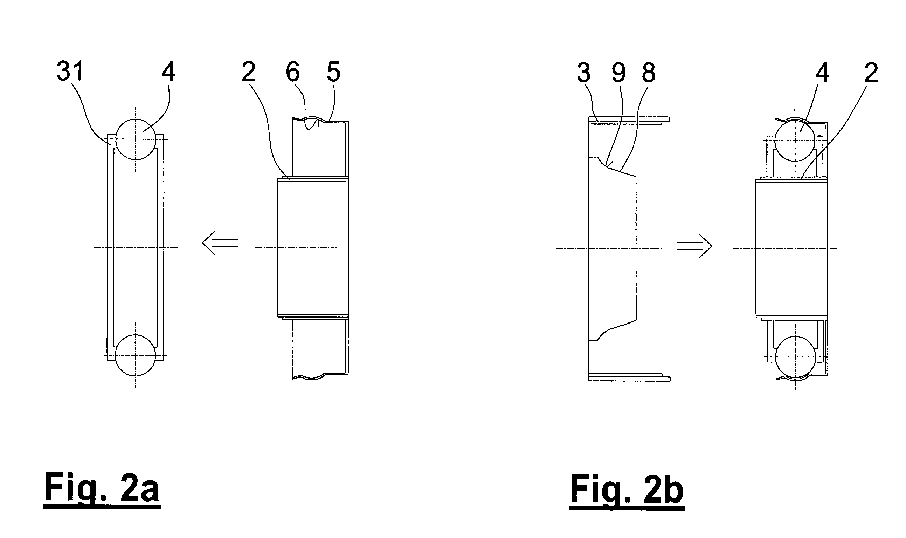

In fig. 2a till 2d the assembly process of the bearing is depicted. The inner ring 2 as well as the outer ring 3 together with the sections 5 and 8 are machined by a deep-draw and/or pressing process in which the sheet metal is formed in the shape depicted in fig. 1.

At first, the balls 4 are located in the cage 31 as shown in fig. 2a. Then, inner ring 2 and cage 31 with balls 4 are pushed together as illustrate by the arrow in fig. 2a.

As can be seen in fig. 2b the outer ring 3 and the pre-assembled unit consisting of inner ring 2 and cage 31 with balls 4 are pushed together, see arrow in fig. 2b.

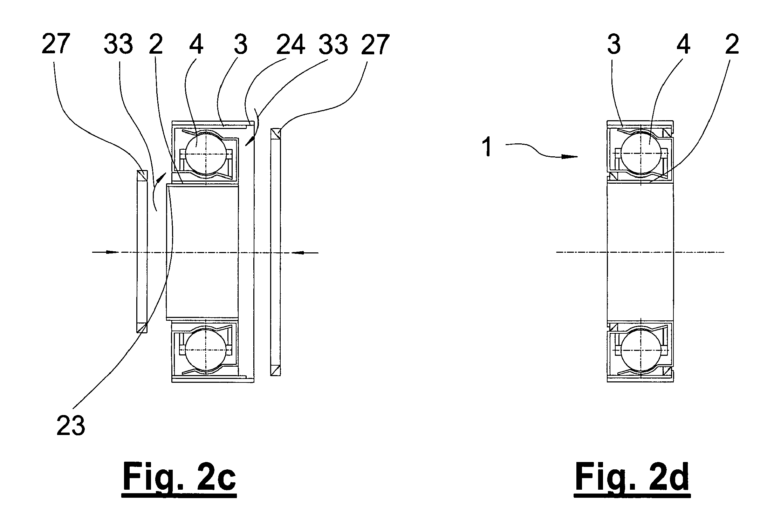

The resulting unit is shown in fig. 2c. In this state, two sealing devices 27 are pushed in the ring space between inner ring 2 and outer ring 3. When the sealing devices 27 are brought in position the extending portions 23 and 24 are bended from the axially extending state shown in fig. 2c to the radial extending state shown in fig. 2d (see arrows 33 in fig. 2c). By doing this the assembly state according to fig. 2d is reached which finishes the assembly of the bearing 1.

The sealing device 27 can be electrically conductive to make the bearing 1 electrically conductive.

The fit of the inner ring 2 and/or outer ring 3 can be a press fit to ensure a secure fixing of the rings on the shaft or in the housing.

Before bending the extentions 23 and 24 from the position according fig. 2c to that one according fig. 2d the inner of the bearing 1, i. e. the space between inner ring 2 and outer ring 3, can be filled with a lubricant. Not depicted is the possibility that at least one of the rings 2, 3 has a lubrication opening to refill lubricant into the bearing. On the other hand it is also possible to use the bearing without lubricant. In this case a coating, e. g. with PTFE, can be employed.

The bearing 1 can be produced from the common known materials as steel, aluminium, magnesium, titan and alloys from those materials. Also thermoplastic material is possible not only for the cage 31 but also for the bearing rings and for the balls (for application with very low load). If the load is higher steel rings are preferred which can be hardened (at least the raceways). The bearing parts can be magnetic.

Depending on the load which is to carry by the bearing 1 the number of rolling elements can vary. Sometimes it is preferred to use a full complement bearing which comes up with as many rolling elements as possible.

Sensor elements for different purposes can also be employed which are known in the prior art as such.

Finally, the bearing 1 can be equipped with features (grooves, extentions etc.) to facilitate the mouting and/or dismouting of it.

As can be seen in fig. 1 two sensors 28 - now understood as being load detection sensors - can be arranged in the region of the raceway portions 16, 17 along the axis of load and at the opposite sides of the raceways 6, 9. By doing this it is very easy to mount the sensors 28. For arranging the sensors 28 no preparation of the raceway portions 16, 17 is necessary, e. g. milling of a recess for inserting the sensor 28. On the other hand, the sensors 28 have not to be arranged at the circumference of the bearing rings where danger of wear exists.

### Reference Numerals:

- 1: roller bearing
- 2: inner ring
- 3: outer ring
- 4: rolling element
- 5: section
- 6: raceway
- 7: center / axis of the bearing
- 8: section
- 9: raceway
- 10: leg
- 11: leg
- 12: axially extending portion
- 13: axially extending portion
- 14: axially extending portion
- 15: axially extending portion
- 16: raceway portion
- 17: raceway portion
- 18: bottom of the U-shaped part
- 19: bottom of the U-shaped part
- 20: middle of the raceway
- 21: middle of the raceway
- 22: axial region / extention
- 23: radial extending portion
- 24: radial extending portion
- 25: axial end
- 26: axial end
- 27: function element (sealing device)
- 28: function element (temperature detecting device, load detection device/sensor)
- 29: slit
- 30: axial extending state
- 31: cage
- 32: cylindrical impression
- 33: arrow

- r₁: radial distance
- r₂: radial distance
- r₃: radial distance
- r₄: radial distance
- do: thickness of the inner ring / outer ring
- d₁: thickness of raceway portion
- d₂: thickness of the radial extending portion
- rᵢ: radial distance
- rₐ: radial distance
- l: length
- t: depth
- x: protuberance

## Claims

1. Roller bearing (1) having an inner ring (2) and an outer ring (3), wherein a plurality of rolling elements (4) is arranged between the inner ring (2) and the outer ring (3),
**characterized in**
**that** the inner ring (2) is connected with or has a section (5) which has a raceway (6) for the rolling elements (4) wherein the surface of this raceway (6) is oriented at least partially towards the center or axis (7) of the bearing (1) and
**that** the outer ring (3) is connected with or has a section (8) which has a raceway (9) for the rolling elements (4) wherein the surface of this raceway (9) is oriented at least partially away from the center or axis (7) of the bearing (1).

2. Roller bearing according to claim 1, **characterized in that** the inner ring (2) and the section (5) connected to or being part of it have a substantially U-shaped form in the cross section.

3. Roller bearing according to claim 1 or 2, **characterized in that** the outer ring (3) and the section (8) connected to or being part of it have a substantially U-shaped form in the cross section.

4. Roller bearing according to claims 2 and 3, **characterized in that** in the mounted state of the bearing (1) both substantially U-shaped parts (2, 5; 3, 8) are inserted with their open end in each other.

5. Roller bearing according to one of claims 2 till 4, **characterized in that** at least one of the sections (5, 8), preferably both sections, forming a leg (10, 11) of the substantially U-shaped part has two axially extending portions (12, 13; 14, 15) which are connected by a raceway portion (16, 17) forming the raceway (6, 9) for the rolling elements (4).

6. Roller bearing according to claim 5, **characterized in that** both axially extending portions (12, 13; 14, 15) are arranged with different radial distances (r₁, r₂, r₃, r₄) from the axis (7) of the bearing (1).

7. Roller bearing according to claim 6, **characterized in that** the bigger radial distance (r₂, r₃) is between 105 % and 135 %, preferably between 110 % and 130 %, of the smaller radial distance (r₁, r₄).

8. Roller bearing according to one of claims 5 till 7, **characterized in that** the axial length of the axially extending portion (12, 14) adjacent to the bottom (18, 19) of the U-shaped part (2, 5; 3, 8) is substantial longer than the axially extending portion (13, 15) remote from the bottom (18, 19) of the U-shaped part (2, 5; 3, 8).

9. Roller bearing according to one of claims 5 till 8, **characterized in that** the thickness (do) of the axially extending portions (12, 13, 14, 15) is substantially equal and bigger than the thickness (d₁) of the raceway portion (16, 17).

10. Roller bearing according to claim 9, **characterized in that** the thickness (d₁) of raceway portion (16, 17) is between 65 % and 90 % of the thickness (do) of the axially extending portions (12, 13, 14, 15).

11. Roller bearing according to one of claims 1 till 10, **characterized in that** the middle (20) of the raceway (9) connected with or being part of the outer ring (3) is arranged at a smaller distance (rᵢ) from the axis (7) of the bearing (1) as the middle (21) of the raceway (6) connected with or being part of the inner ring (2).

12. Roller bearing according to one of claims 1 till 11, **characterized in that** in the mounted state of the bearing (1) the inner ring (2) and the outer ring (3) extend substantially over the same axial region (22).

13. Roller bearing according to one of claims 1 till 12, **characterized in that** at least one of the rings (2, 3), preferably both rings (2, 3), have a radial extending portion (23, 24) at one of their axial ends (25, 26) extending into the direction to the other ring (2, 3).

14. Roller bearing according to claim 13, **characterized in that** the radial extending portion (23, 24) has a reduced thickness (d₂) compared with the thickness (do) of the inner ring (2) and/or outer ring (3).

15. Roller bearing according to claim 14, **characterized in that** the thickness (d₂) of the radial extending portion (23, 24) is between 50 % and 85 % of the thickness (do) of the inner ring (2) and/or outer ring (3).

16. Roller bearing according to one of claims 1 till 15, **characterized by** additional function elements (27, 28) which are connected to or fixed at the bearing (1).

17. Roller bearing according to claim 16, **characterized in that** the additional function elements (27, 28) are connected to or fixed at the outer ring (3) of the bearing (1).

18. Roller bearing according to claim 16 or 17, **characterized in that** the function element is a rotational speed detection device.

19. Roller bearing according to claim 16 or 17, **characterized in that** the function element is a temperature detection device (28).

20. Roller bearing according to claim 16 or 17, **characterized in that** the function element is a load detection device.

21. Roller bearing according to claim 16 or 17, **characterized in that** the function element is a radial displacement device for static load measurement.

22. Roller bearing according to claim 16 or 17, **characterized in that** the function element is a measurement device for measuring a parameter or a condition of the lubricant of the bearing, especially the water ingress in the lubricant.

23. Roller bearing according to claim 16 or 17, **characterized in that** the function element is a measurement device for measuring a physical property or physical parameter of the bearing.

24. Roller bearing according to claim 16, **characterized in that** the function element is a sealing device (27).

25. Roller bearing according to claim 24, **characterized in that** the sealing device (27) seals the slit (29) between the end of the radial extending portion (23, 24) and the other ring (2, 3).

26. Roller bearing according to one of claims 13 till 25, **characterized in that** the radial extending portion (23, 24) is deformed from an axially extending state (30) to the radial extending state during assembly of the bearing (1).

27. Roller bearing according to claim 26, **characterized in that** the function element, especially the sealing device (27), is assembled and fixed in the bearing (1) by deforming the extending portion (23, 24) from the axially extending state to the radial extending state.

28. Roller bearing according to one of claims 1 till 27, **characterized in that** the inner ring (2) and/or the outer ring (3), preferably both rings (2, 3), and the sections (5, 8) consist of sheet metal.

29. Roller bearing according to claim 28, **characterized in that** the sheet metal has substantially the same thickness (do) along its entire extention, at least before being formed to its final shape.

30. Roller bearing according to one of claims 1 till 29, **characterized by** a cage (31) for guiding the rolling elements (4).

31. Roller bearing according to one of claims 1 till 29, **characterized in that** it is a full complement bearing.

32. Roller bearing according to one of claims 1 till 31, **characterized in that** the inner ring (2) and/or the section (5) connected to or being part of it and/or the outer ring (3) and/or the section (8) connected to or being part of it are hardened.

33. Roller bearing according to one of claims 1 till 32, **characterized in that** at least a part of the inner ring (2) and/or the section (5) connected to or being part of it and/or the outer ring (3) and/or the section (8) connected to or being part of it, especially the raceways (6, 9), are coated with a cover with low friction properties.

34. Roller bearing according to claim 33, **characterized in that** the cover consists of polytetraflourethylen (PTFE) or of a diamond like coating (DLC).

35. Roller bearing according to one of claims 1 till 34, **characterized in that** the rings (2, 3) constist of steel, aluminium, magnesium, titan or an alloy of those metalls.

36. Roller bearing according to one of claims 1 till 35, **characterized in that** the rolling elements (4) are balls.

37. Roller bearing according to one of claims 1 till 36, **characterized in that** the rolling elements (4) consist of steel, of ceramic material of thermoplastic material or of glass.

38. Roller bearing according to one of claims 1 till 37, **characterized in that** the outer dimensions of the bearing are in accordance with the outer dimensions of standard bearings, especially of catalogue bearings.

39. Roller bearing arrangement, **characterized in that** at least two bearings (1) according to one of claims 1 till 38 are arranged as angular contact ball bearings.

40. Roller bearing arrangement according to claim 39, **characterized in that** the at least two bearings (1) are arranged side by side.

41. Roller bearing arrangement according to claim 39 or 40, **characterized in that** the bearings (1) are self alligning ball bearings.

42. Roller bearing arrangement, **characterized in that** at least two bearings (1) according to one of claims 1 till 38 are arranged as thrust bearings.
